# EUROPEAN PATENT APPLICATION

(11) **EP 1 727 226 A1**
(43) Date of publication of application: **29.11.2006**
(21) Application number: 05720756.5
(22) Date of filing: 15.03.2005
(51) Int. Cl.: H01M 8/02, H01M 8/04, H01M 8/10

(54) **POLYMER ELECTROLYTE FUEL CELL**

(30) Priority: 15.03.2004 JP 2004073387
(71) Applicant: Matsushita Electric Industries Co., Ltd., Kadoma-shi, Osaka 571-8501 (JP)
(72) Inventor: TAKEGUCHI, Shinsuke c/o Matsushita Electric Indust, Osaka-shi Osaka 540-6319 (JP); KANBARA, Teruhisa c/o Matsushita Electric Industri, Osaka-shi Osaka 540-6319 (JP); HATOH, Kazuhitoc/oMatsushita Electric Industrial C, Osaka-shi Osaka 540-6319 (JP)
(74) Representative: Price, Paul Anthony King
(86) International application number: PCT/JP2005/004499
(87) International publication number: WO 2005/088750

(57) **Abstract**

There is provided a polymer electrolyte fuel cell capable of: sufficiently suppressing the progress of drying of the polymer electrolyte in the catalyst layers and of the polymer electrolyte membrane, and in addition, the occurrence of flooding, even if the moistened conditions of the fuel gas or the oxidant gas fed to the fuel cell change; suppressing the degradation of the anode, cathode and polymer electrolyte membrane; and thus reducing the deterioration of the cell performance readily and reliably. The polymer electrolyte fuel cell includes: a polymer electrolyte membrane; an anode and a cathode which are arranged in such a manner as to hold the polymer electrolyte membrane between them; and a pair of separators having a first gas flow path for feeding fuel gas to the anode and discharging fuel gas from the anode and a second gas flow path for feeding oxidant gas to the cathode and discharging oxidant gas from the cathode, where a notched portion is made on each of the anode and the cathode in such a position so as to allow the two notched portions to face each other, the polymer electrolyte membrane is held by the pair of separators in that position, and the polymer electrolyte membrane is supported by reinforcing members having gas permeability in the notches.

## Description

### TECHNICAL FIELD

The present invention relates to a polymer electrolyte fuel cell, in particular, to a polymer electrolyte fuel cell that has improved membrane electrode assembly and separator structures, and hence offering increased durability.

### BACKGROUND ART

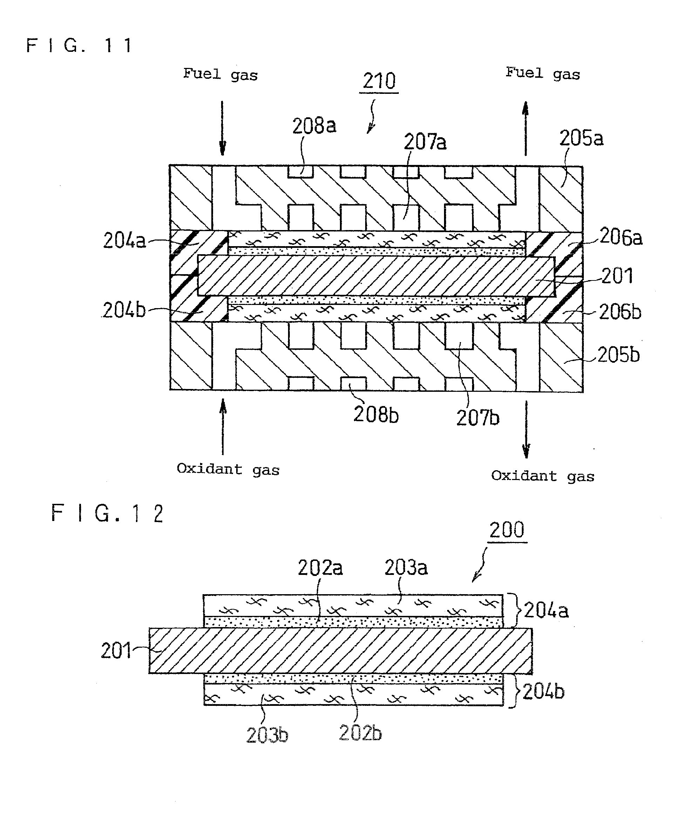

Fuel cells that use a polymer electrolyte membrane having cationic (hydrogen-ion) conductivity produce electric power and heat at the same time by allowing hydrogen-containing fuel gas to react electrochemically with oxygen-containing oxidant gas such as air.
Referring to Figure 11, there is shown a schematic sectional view showing one example of basic construction of a unit cell which is carried on conventional polymer electrolyte fuel cells. Referring to Figure 12, there is shown a schematic sectional view showing one example of basic construction of a membrane electrode assembly (MEA) included in the unit cell 210 shown in Figure 11.
As shown in Figure 12, in an MEA 200 in conventional polymer electrolyte fuel cells, catalyst layers 202a and 202b each made of a mixture of carbon powder with an electrode catalyst (e.g. platinum metal) carried on its surface and polymer electrolyte having hydrogen-ion conductivity are formed on both sides of a polymer electrolyte membrane 201 that selectively transports hydrogen ions.

Outside the catalyst layers 202a and 202b, gas diffusion layers 203a and 203b are provided, respectively. And the catalyst layer 202a and the gas diffusion layer 203a constitute an anode (a gas diffusion electrode) 204a while the catalyst layer 202b and the gas diffusion layer 203b constitute a cathode (a gas diffusion electrode) 204b.
In the catalyst layer 202a of the anode 204a, protons are produced by the reaction expressed by the following formula (1): H₂ → 2H⁺ + 2e⁻, whereas in the catalyst layer 202b of the cathode 204b, oxygen and the protons having migrated from the anode 204a produce water by the reaction expressed by the following formula (2): 1/2O₂ + 2H⁺ + 2e⁻ → H₂O.

In the unit cell 210 that uses the MEA 200 shown in Figure 12, in order to prevent the fuel gas and the oxidant gas fed to the anode 204a and the cathode 204b, respectively, from leaking outside and prevent the two kinds of gases from mixing with each other, gaskets 206a and 206b are provided around the anode 204a and the cathode 204b in such a manner that they hold the polymer electrolyte membrane 201 between them, as shown in Figure 11.
In some cases, the gaskets 206a and 206b, along with the anode 204a, cathode 204b and polymer electrolyte membrane 201 are assembled into an integral structure and the resultant integral structure is sometimes called an MEA.
The unit cell 210 includes plate-like conductive separators 205a and 205b for mechanically fixing and electrically connecting a plurality of adjacent unit cells to each other, as shown in Figure 11. In the principal surfaces of the separators 205a and 205b, which come in contact with the anode 204a and the cathode 204b, respectively, are formed gas flow paths 207a and 207b for feeding reaction gases (fuel gas or oxidant gas) to the anode 204a and the cathode 204b and carrying away the product gas or excess gas.
The gas flow paths 207a and 207b can be provided separately from the separators 205a and 205b; however, commonly they are provided by grooving the separators 205a and 205b, as shown in Figure 11.

When electricity is generated the MEA 200 develops heat. Accordingly, to keep the MEA 200 at a permissible operating temperature, excess heat is removed by circulating a cooling fluid such as cooling water around the MEA 200. Commonly, at least one of the separators 205a and 205b is allowed to have a cooling-water flow path 208a or 208b provided, on its surface opposite to the surface on which the gas flow path 207a or 207b are formed, so that a cooling fluid such as cooling water is circulated through the cooling-water flow path 208a or 208b.
As the cooling-water flow paths 208a and 208b, serpentine cooling-water flow paths are often used each of which is made of a plurality of linear grooves and turned grooves (curved grooves) that connect the ends of the adjacent linear grooves from upstream to downstream. In such serpentine cooling-water flow paths, the grooves are usually made at regular intervals. The cooling-water flow paths 208a and 208b can sometimes be made of a plurality of linear grooves almost in parallel with each other; in this case, too, the grooves are usually made at regular intervals.

The polymer electrolyte membrane 201 exhibits hydrogen-ion exchange capability due to the terminal sulfonic acid group of the polymer. And to exhibit the hydrogen-ion exchange capability, the membrane is required to retain a certain moisture content, and thus, at least one of the fuel gas and the oxidant gas fed to the fuel cell needs to be moistened. But on the other hand, moistening the fuel gas or the oxidant gas introduces a problem of deterioration in cell performance which is caused by a phenomenon, known as flooding, that the larger the moisture content in a gas moistened becomes, the more the gas flow paths 207a and 207b get blocked.
As one of the measures taken to prevent the occurrence of such a phenomenon, there is proposed, for example, in Patent Document 1 a solid polymer fuel cell that suppresses the occurrence of water-blockage especially in the vicinity of the outlet for the fuel gas, and hence operates stably, in particular, a solid polymer fuel cell that is provided with a non-electrode region with the intention of improving the cell performance and life characteristics of the fuel cell by decreasing the temperature gradient in the direction of oxidant gas flow (see Figure 1 of Patent Document 1, for example).

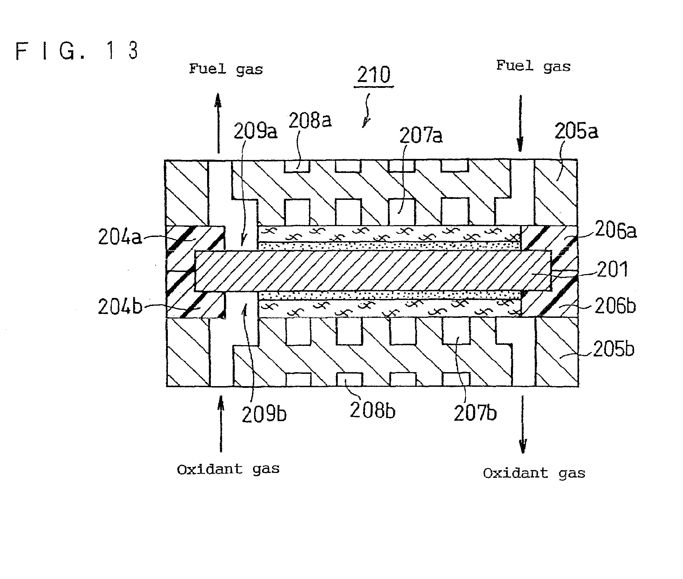

The solid polymer fuel cell described in Patent Document 1 will be outlined with reference to Figure 13. In the unit cell 210 having a gas flow path structure in which fuel gas and oxidant gas are allowed to flow opposite to each other in the face of the unit cell 210 and to which the oxidant gas is fed in state where it is moistened to a lower degree, non-electrode regions 209a and 209b, each of which includes neither anode 204a nor cathode 204b, are provided on the respective surfaces of the polymer electrolyte membrane 201 opposite to the separator 205a and the separator 205b, as shown in Figure 13, with the intention of promoting the water migration from the anode 204a side, where water-blockage is likely to occur, to the cathode 204b side and of avoiding the occurrence of water-blockage in the vicinity of the outlet of the anode 204a and moistening the oxidant gas.
[Patent Document 1] JP2000-277128A

### DISCLOSURE OF THE INVENTION

### PROBLEM TO BE SOLVED BY THE INVENTION

However, in cogeneration systems etc. that employ a fuel cell in particular, when the moistened conditions of the fuel gas or the oxidant gas change at the time of system's start-up or load fluctuation, first an overly moistened portion (the portion where relative humidity is higher than 100% and gases and condensed water coexist) or a low moistened portion (the portion where the relative humidity is lower than 100%) is formed in the anode 204a or the cathode 204b. In this case, a problem arises that the anode 204a or cathode 204b having such a low moistened portion or the polymer electrolyte membrane 201 tends to degrade, and eventually the fuel cell performance may deteriorate.

If the technique described in the above described Patent Document 1 is used as a preventive measure against the above-mentioned problem, it seems possible to expect moisture to be supplied from the fuel gas side to the oxidant gas side through the non-electrode region 209a and the non-electrode region 209b of the polymer electrolyte membrane 1 on the oxidant gas inlet side when the amount of the moisture added to oxidant gas is decreased.
However, in the technique described in Patent Document 1, because the operation requirement (moistening requirement) is established so that the oxidant gas is fed in state where it is moistened to a lower degree, it is very difficult to sufficiently prevent the above described degradation of the anode 204a or cathode 204b and the polymer electrolyte membrane 201. Further, in the technique described in Patent Document 1, even if the operation requirement is established so that the dew point is equal to or higher than the cell temperature, because of the gas flow path structure of the unit cell 201 in which fuel gas and oxidant gas are allowed to flow opposite to each other in the face of the unit cell 210, the reaction gases are brought to the supersaturated state in the vicinity of the inlet of the unit cell 210, where moisture is condensed, and thus, mist is supplied to the gas flow path of the unit cell 210. This gives rise to a problem of making flooding caused by mist more likely to occur. In this case, because of the gas flow path structure of the unit cell 210 in which fuel gas and oxidant gas are allowed to flow opposite to each other in the face of the unit cell 210, either of the fuel gas and the oxidant gas is necessarily fed against gravity. Thus, excess energy is required for supplying the mist contained in either of the fuel gas and the oxidant gas to the fuel cell against gravity, which causes a problem of increase in pressure loss in the gas flow paths 207a and 207b. Furthermore, in this case, flooding is made more likely to occur, whereby the cell performance (e.g. cell voltage) unstably fluctuates or deteriorates, which makes it difficult to maintain the rated characteristics required (resulting in decrease in the reliability of the cell).

Still further, in the non-electrode regions 209a and 209b of the fuel cell described in the above described Patent Document 1, the thin polymer electrolyte membrane 201 usually having a thickness of 20 to 200 µm can sometimes be damaged or deteriorate or cross leak can sometimes occur in which the fuel gas and the oxidant gas allowed to flow on the respective sides of the polymer electrolyte membrane 201 are mixed with each other without reacting, since the membrane is left in a naked state and not supported. This gives rise to a problem of decrease in performance of the fuel cell.
In addition, the fuel cell described in Patent Document 1 presents problems of causing the polymer electrolyte membrane 201 to be stressed greatly, thereby damaged and making cross leak more likely to occur, since it employs counter flow arrangement in which fuel gas and oxidant gas are allowed to flow opposite to each other.

Accordingly, it is a primary object of the present invention to provide a polymer electrolyte fuel cell capable of: sufficiently suppressing the progress of drying in the polymer electrolyte in the catalyst layer and in the polymer electrolyte membrane and the occurrence of flooding, even if the moistened conditions of the fuel gas or the oxidant gas fed to the fuel cell change; suppressing the degradation of the anode, cathode and polymer electrolyte membrane; and thus reducing the deterioration of the cell performance readily and reliably.

### MEANS FOR SOLVING THE PROBLEM

The present inventors hold a view that to allow a fuel cell to offer excellent durability while keeping the cell efficiency sufficiently high, it is effective to allow the fuel gas and oxidant gas to operate under the excessively moistened conditions where the fuel gas and oxidant gas fed to the fuel cell are sufficiently moistened. And after directing tremendous research efforts towards overcoming the above described problems from the above described viewpoint, they finally found that very effective is to provide a fuel cell with the following structure, where the moisture (particularly liquid) in the gas flow paths can be readily discharged even under excessively moistened conditions, and at the same time, the moisture content in the catalyst layers of both electrodes and in the polymer electrolyte membrane can be sufficiently maintained, thereby sufficiently preventing the progress of drying of the catalyst layers and the polymer electrolyte membrane.
Specifically, in order to overcome the above described problem, the present invention is a polymer electrolyte fuel cell, including a unit cell which comprises: at least,
a membrane electrode assembly including an anode comprising a catalyst layer, a cathode comprising a catalyst layer, and a polymer electrolyte membrane which is provided between the anode and the cathode and has hydrogen-ion conductivity; and
a pair of conductive separators which are arranged in such a manner as to hold the membrane electrode assembly therebetween and which has a first gas flow path having a fuel gas inlet for feeding fuel gas to the anode and a fuel gas outlet for discharging fuel gas from the anode formed on a main surface facing the anode and a second gas flow path having an oxidant gas inlet for feeding oxidant gas to the cathode and an oxidant gas outlet for discharging oxidant gas from the cathode formed on a main surface facing the cathode, characterized in that
the cell is arranged in such a manner that the direction normal to either of the main surface facing the anode and the main surface facing the cathode of the pair of separators intersects the gravity direction,
the fuel gas inlet and the oxidant gas inlet are formed close to each other in the pair of separators, the first gas flow path is so formed that the fuel gas as a whole flows through the first gas flow path not against the gravity direction, but in the gravity direction, and the second gas flow path is so formed that the oxidant gas as a whole flows through the second gas flow path not against the gravity direction, but in the gravity direction,
the main surface facing the anode of the polymer electrolyte membrane of the membrane electrode assembly has a first notched portion formed, where the catalyst layer is not formed, the main surface facing the cathode of the polymer electrolyte membrane of the membrane electrode assembly has a second notched portion formed, where the catalyst layer is not formed, and the first and second notched portions are formed in such a position that they are overlapped at least in part when viewed from the direction almost normal to either of the main surface facing the anode and the main surface facing the cathode of the polymer electrolyte membrane,
the first notched portion of the polymer electrolyte membrane has a first reinforcement member arranged having gas permeability,
the second notched portion of the polymer electrolyte membrane has a second reinforcement member arranged having gas permeability, and
the polymer electrolyte membrane is supported in the first and second notched portions in such a manner that the polymer electrolyte membrane is held between the first reinforcement member and the second reinforcement member.

Because of the above described structure, the polymer electrolyte fuel cell of the present invention allows the moisture in the fuel gas and the moisture in the oxidant gas to migrate from one side to another through the polymer electrolyte membrane utilizing the concentration gradient as driving force (driving source), even if the moistened conditions of the fuel gas or the oxidant gas fed to the fuel cell change. Thus, the polymer electrolyte fuel cell of the present invention is capable of maintaining a good moistened state (a state in which good ion conductivity can be ensured in the polymer electrolyte in the catalyst layers and in the polymer electrolyte membrane), and at the same time, maintaining a balance of moistened state, in other words, a balance of moistened state between the fed reaction gases. Further, selecting the positional relationship between the oxidant gas inlet and the reducer gas inlet and the directional relationship between the oxidant gas flow and the reducer gas flow (this relationship is the opposite of the directional relationship between the oxidant gas flow and the reducer gas flow described in Patent Document 1) as described above makes it possible to sufficiently avoid the progress of drying of the polymer electrolyte in the catalyst layers and of the polymer electrolyte membrane and the occurrence of flooding. As a result, a polymer electrolyte fuel cell can be provided which is capable of sufficiently retarding the damage and the degradation of the anode, cathode and polymer electrolyte membrane and the occurrence of cross leak, and thus reducing the deterioration of the cell performance readily and reliably.

### EFFECT OF THE INVENTION

According to the polymer electrolyte fuel cell of the present invention, even if the moistened conditions of the fuel gas or the oxidant gas fed to the fuel cell change, it is made possible to sufficiently suppress the progress of drying of the polymer electrolyte in catalyst layers as well as the occurrence of flooding, and thus, suppress the degradation of the anode, cathode and polymer electrolyte membrane, thereby reducing the deterioration of the cell performance readily and reliably.

### BRIEF DESCRIPTION OF THE DRAWINGS

Figure 1 is a schematic cross-sectional view showing one example of the basic structure of a unit cell, which is mounted in a polymer electrolyte fuel cell in accordance with the first embodiment of the present invention;
Figure 2 is a schematic cross-sectional view showing one example of the basic structure of a membrane electrode assembly (MEA) included in the unit cell 11 shown in Figure 1;
Figure 3 is a schematic perspective view of the MEA 10 shown in Figure 2;
Figure 4 is an enlarged front view of the substantial portion of the first gas flow path 8a side of a separator 5a provided in a fuel cell in accordance with the first embodiment of the present invention;
Figure 5 is an enlarged front view of the substantial portion of the second gas flow path 8b side of a separator 5b provided in a fuel cell in accordance with the first embodiment of the present invention;
Figure 6 is a schematic perspective view of an MEA 30 aboard a fuel cell in accordance with the second embodiment of the present invention;
Figure 7 is an enlarged front view of the substantial portion of the first gas flow path 8a side of a separator 5a provided in a fuel cell in accordance with the second embodiment of the present invention;
Figure 8 is an enlarged front view of the substantial portion of the second gas flow path 8b side of a separator 5b provided in a fuel cell in accordance with the second embodiment of the present invention;
Figure 9 is a graph showing the cell voltages (V) of fuel cell 1 of an example of the present invention and fuel cell 3 of a comparative example;
Figure 10 is a graph showing the cell voltages (V) of fuel cell 2 of an example of the present invention and fuel cell 3 of the comparative example;
Figure 11 is a schematic cross-sectional view showing one example of the basic structure of a unit cell, which is mounted in a polymer electrolyte fuel cell of prior art;
Figure 12 is a schematic cross-sectional view showing one example of the basic structure of a membrane electrode assembly (MEA) included in the unit cell 210 shown in Figure 11; and
Figure 13 is a schematic cross-sectional view showing one example of the basic structure of a unit cell aboard a polymer electrolyte fuel cell of prior art

### BEST MODE FOR CARRYING OUT THE INVENTION

In the following, preferred embodiments of the present invention will be described with reference to the accompanying drawings. In the description, like reference numerals denote identical or corresponding parts and repetitive aspects of the description are sometimes omitted.

### [First Embodiment]

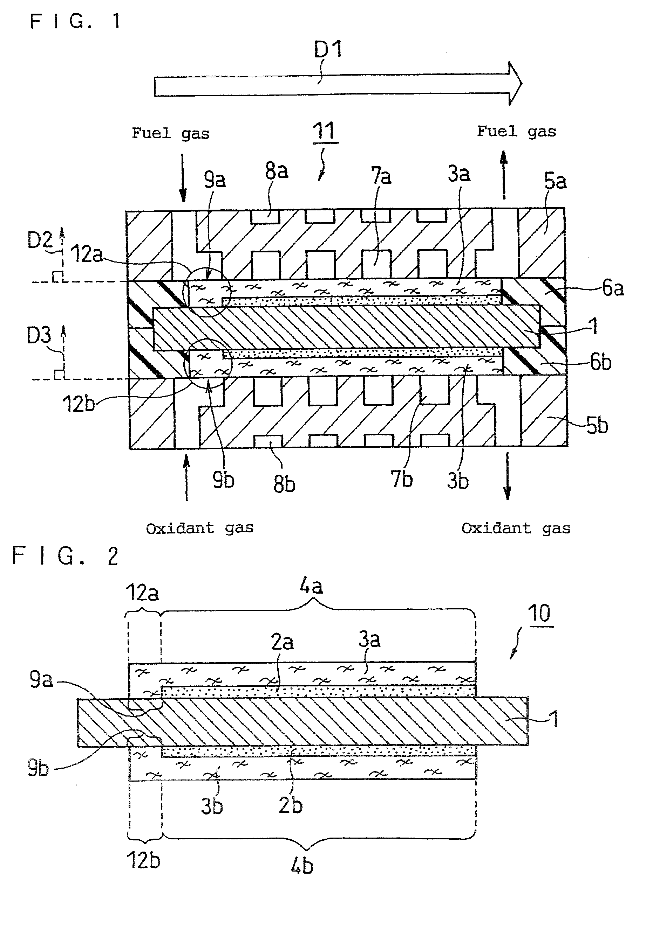

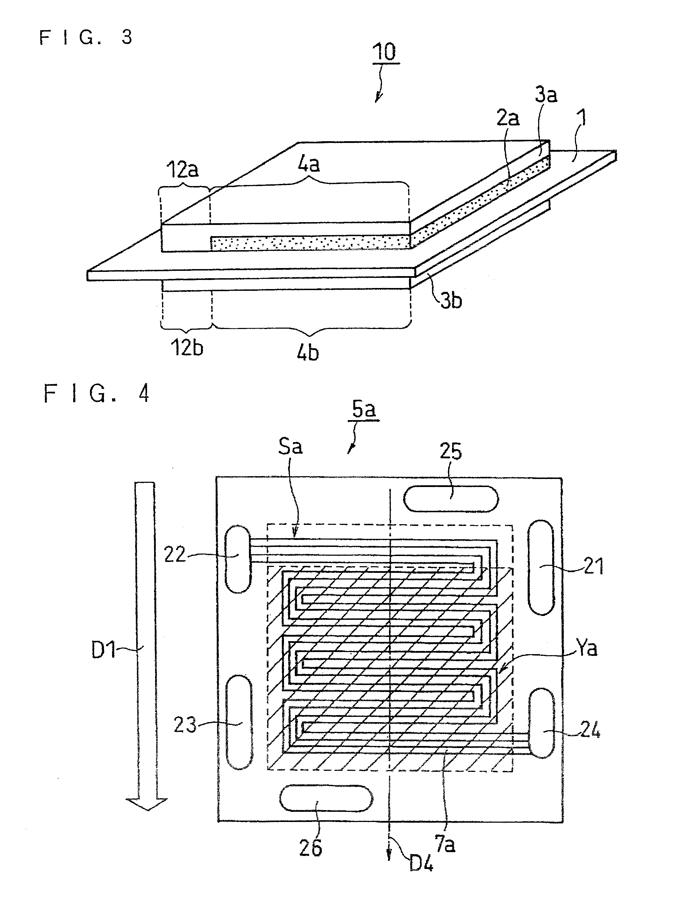

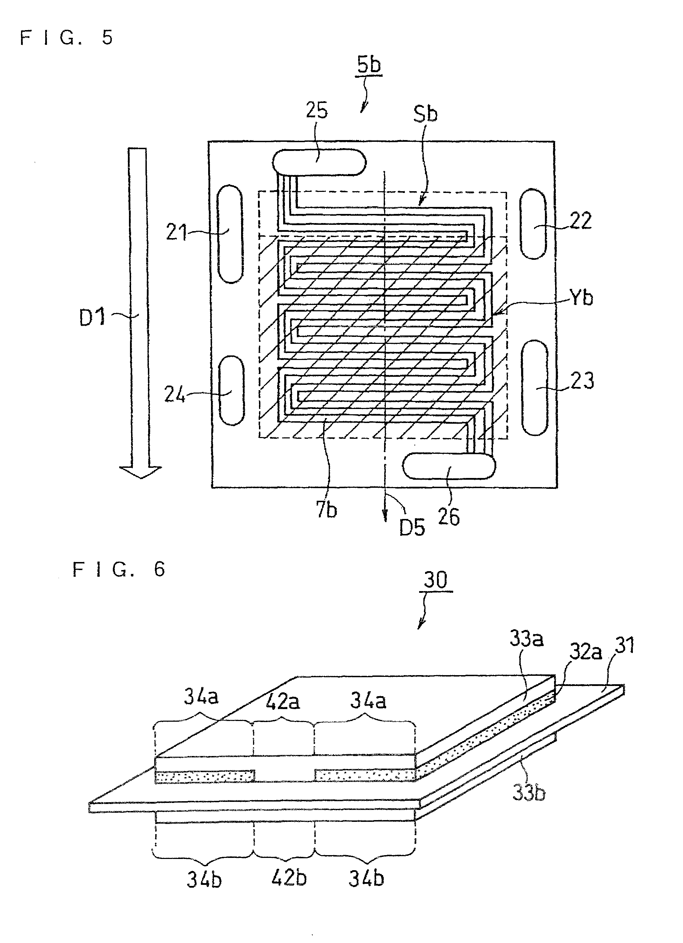

Figure 1 is a schematic cross-sectional view of one example of the basic structure of a unit cell, which is mounted in a polymer electrolyte fuel cell in accordance with the first embodiment of the present invention. Figure 2 is a schematic cross-sectional view showing one example of the basic structure of a membrane electrode assembly (MEA) included in the unit cell 11 shown in Figure 1. Figure 3 is a schematic perspective view of the MEA 10 shown in Figure 2. Figure 4 is an enlarged front view of the substantial portion of the first gas flow path 7a side of a separator 5a provided in a fuel cell in accordance with this embodiment of the present invention. And Figure 5 is an enlarged front view of the substantial portion of the second gas flow path 7b side of a separator 5b provided in a fuel cell in accordance with this embodiment of the present invention.
As shown in Figure 2, in the MEA 10 of the polymer electrolyte fuel cell in accordance with this embodiment, catalyst layers (a first catalyst layer and a second catalyst layer) 2a and 2b, each of which is made of a mixture of a catalyst comprising conductive carbon particles having an electrode catalyst (e.g. platinum metal) supported on their surface and a polymer electrolyte having hydrogen-ion conductivity, are formed on both sides of a polymer electrolyte membrane 1 that transports cation (hydrogen ion) selectively.

As the polymer electrolyte membrane 1, a conventionally known one can be used. For example, a polymer electrolyte membrane can be used which is made of perfluorocarbonsulfonic acid having a backbone chain composed of -CF₂- and a side chain containing a sulfonic group (-SO₃H) as a functional group at its end. Concrete examples include polymer electrolyte membranes commercially available under the trade name of Nafion (manufactured by Du Pont, U.S.), Flemion (manufactured by Asahi Glass Co., Ltd.) or Aciplex (manufactured by Asahi Kasei Corporation). The thickness of the polymer electrolyte membrane 1 is usually 20 to 200 µm.
The catalyst layers 2a and 2b are formed of: conductive carbon particles having an electrode catalyst of a noble metal supported on their surface and a polymer electrolyte having hydrogen-ion conductivity. In the formation of the catalyst layers 2a and 2b, an ink for forming catalyst layers is used which contains: at least conductive carbon particles having an electrode catalyst of a noble metal supported on their surface; a polymer electrolyte described above; and a dispersion medium.
Preferred examples of polymer electrolytes include polymer electrolytes having a sulfonic, carboxylic, phosphonic or sulfonimido group as a cation-exchanging group. From the viewpoint of hydrogen-ion conductivity, polymer electrolytes having a sulfonic group are particularly preferable.

As a polymer electrolyte having a sulfonic group, one having an ion exchange capacity of 0.5 to 1.5 meq/g dry resin is preferable. The reason for this is as follows. If the ion exchange capacity of a polymer electrolyte is 0.5 meq/g dry resin or more, the possibility is eliminated of increase in resistance value of the resultant catalyst layer at a time when electricity is generated, while if the ion exchange capacity of a polymer electrolyte is 1.5 meq/g dry resin or less, the moisture content of the resultant catalyst layer does not increase, whereby the catalyst layer is less likely to swell and the possibility of micropore blocking is eliminated. A polymer electrolyte having an ion exchange capacity of 0.8 to 1.2 meq/g dry resin is particularly preferable.

As the polymer electrolyte, a copolymer is preferable which includes a polymerization unit based on a perfluorovinyl compound expressed by CF₂=CF-(OCF₂CFX)ₘ-Oₚ-(CF₂)ₙ-SO₃H (m is an integer of 0 to 3, n is an integer of 1 to 12, p is 0 or 1, and X represents a fluorine atom or trifluoromethyl group) and a polymerization unit based on tetrafluoroethylene.
Preferred examples of fluorovinyl compounds described above include compounds expressed by the following formulae (1) to (3), wherein q is an integer of 1 to 8, r is an integer of 1 to 8, and t is an integer of 1 to 3.

CF₂=CFO(CF₂)_{q}-SO₃H (1)

CF₂=CFOCF₂CF(CF₃)O(CF₂)ᵣ-SO₃H (2)

CF₂=CF(OCF₂CF(CF₃))ₜO(CF₂)₂-SO₃H (3)

A polymer electrolyte described above may be used as a constituent material for the polymer electrolyte membrane 1.

An electrode catalyst used in the present invention is supported on conductive carbon particles (powder) when used and made of metal particles. As such metal particles, various types of metals can be used without specific limitations. For example, one or more kinds of metals selected from the group consisting of platinum, gold, silver, ruthenium, rhodium, palladium, osmium, iridium, chromium, iron, titanium, manganese, cobalt, nickel, molybdenum, tungsten, aluminum, silicon, zinc and tin are preferably used.
Of the above describe metals, noble metals, platinum and platinum alloys are preferable. A platinum-ruthenium alloy is particularly preferable, because the activity of the catalyst is made stable on the anode.

Preferably, conductive carbon particles have a specific surface area of 50 to 1500 m²/g. The reason for this is as follows. If the specific surface area is 50 m²/g or more, the electrode-catalyst loading rate is relatively easy to increase, and thus, the possibility of decrease in the output characteristics of the resultant catalyst layer is eliminated, while if the specific surface area is 1500 m²/g or less, the micropores do not become unduly small and the coverage with the polymer electrolyte is made easier, whereby the possibility of decrease in the output characteristics of the resultant catalyst layer is eliminated. Conductive carbon particles having a specific surface area of 200 to 900 m²/g are particularly preferable.
Preferably, electrode catalyst particles have an average particle size of 1 to 30 nm. The reason for this is as follows. If the average particle size is 1 nm or more, electrode catalyst particles are easy to prepare industrially, while if the average particle size is 30 nm or less, the activity/g electrode catalyst is not lessened, whereby a rise in fuel cell cost can be suppressed.

In the present invention, as a dispersion medium for the preparation of a catalyst layer forming ink, a liquid is preferably used which contains an alcohol capable of dissolving or dispersing the polymer electrolyte (dispersing the polymer electrolyte includes a dispersed state where part of the polymer electrolyte is dissolved).
Preferably, the dispersing medium contains at least one selected from the group consisting of water, methanol, propanol, n-butyl alcohol, isobutyl alcohol, sec-butyl alcohol and tert-butyl alcohol. Either any one of these water and alcohols alone or two or more in the form of a mixture may be used. Straight-chain alcohols having one OH group per molecule are much preferable, and ethanol is particularly preferable. Such alcohols also include alcohols having an ether linkage, such as ethylene glycol monomethyl ether.

Preferably, the solid concentration of the catalyst layer forming ink is 0.1 to 20% by weight. When forming the catalyst layer by spraying or coating the catalyst layer forming ink, if the solid concentration is 0.1% by weight or higher, a catalyst layer having a prescribed thickness can be obtained without carrying out the spraying or coating repeatedly, thereby preventing the decrease in production efficiency. If the solid concentration is 20% by weight or lower, the viscosity of the mixed solution does not become unduly high, whereby the possibility of allowing the resultant catalyst layer to be nonuniform is eliminated.
Particularly preferably, the solid concentration of the catalyst layer forming ink is 1 to 10% by weight.

In the present invention, the catalyst layer forming ink can be prepared based on any one of conventionally known methods. Concrete examples of such conventionally known methods include: a method utilizing high-speed rotation, for example, utilizing an agitator such as a homogenizer or homomixer or utilizing a high-speed rotation jet stream system; and a method applying shear force to the dispersion by applying high pressure to the dispersion, for example, utilizing high-pressure emulsifier to eject the same through a narrow space.
When forming catalyst layers with the catalyst layer forming ink of the present invention, any one of conventionally known methods can be used. Specifically, the catalyst layers 2a and 2b may be formed directly on the polymer electrolyte membrane 1 or on gas diffusion layers 3a and 3b, or the catalyst layers 2a and 2b may be formed on another support sheet first and then transferred to the polymer electrolyte membrane 1 or to the gas diffusion layers 3a and 3b.

On the outsides of the catalyst layers 2a and 2b, gas diffusion layers (a first gas diffusion layer and a second gas diffusion layer) 3a and 3b are provided, respectively, and the catalyst layer 2a and the gas diffusion layer 3a constitute an anode (a gas diffusion electrode) 4a, while the catalyst layer 2b and the gas diffusion layer 3b constitute a cathode (a gas diffusion electrode) 4b.
The gas diffusion layers 3a and 3b can be made up using a conventionally known porous substrate having gas permeability and conductivity such as carbon paper or carbon felt. And the porous substrate may be subjected to water-repellent treatment by any one of conventionally known methods. The surfaces of the porous substrates facing the catalyst layer 2a or 2b may be provided with a conventionally known water-repellent conductive layer.
The MEA 10 can be prepared by a conventionally known method (e.g. hot pressing) using a polymer electrolyte membrane 1, catalyst layers 2a and 2b and gas diffusion layers 3a and 3b described above, except that first and second notches are made and first and second reinforcement members are provided, as shown in Examples described later.

In order to prevent the fuel gas or the oxidant gas fed to the anode 4a or the cathode 4b from leaking outside or from mixing each other, the unit cell 11 using the MEA 10 shown in Figure 2 is given a structure that includes gaskets 6a and 6b, which are arranged about the anode 4a and the cathode 4b, respectively, in such a manner as to hold the polymer electrolyte membrane 1 between them, as shown in Figure 1.
The unit cell 11 also includes a pair of plate-like conductive separators 5a and 5b for mechanically fixing and electrically connecting a plurality of adjacent cells to each other. The separators 5a and 5b are arranged in such a manner as to hold the MEA 10 between them.
In the principal surface of the separator 5a, which comes in contact with the anode 4a, is formed a gas flow path 7a made of a groove for feeding fuel gas to the anode 4a and carrying away the product gas or excess gas. And in the principal surface of the separator 5b, which comes in contact with the cathode 4b, is formed a gas flow path 7b made of a groove for feeding oxidant gas to the cathode 4b and carrying away the formed gas or excess gas.

Further, as shown in Figures 1, 4 and 5, in the polymer electrolyte fuel cell in accordance with this embodiment, the unit cell 11 is (I) arranged so that the normal direction (D2 or D3) to either of the principal surfaces of the pair of separators 5a and 5b, which come in contact with the anode 4a and the cathode 4b, respectively, intersects the gravity direction D1. Particularly, in the polymer electrolyte fuel cell in accordance with this embodiment, the unit cell 11 is (V) arranged so that the above described normal direction (D2 or D3) intersects almost perpendicular to the gravity direction D1.
Further, as shown in Figures 1, 4 and 5, in the polymer electrolyte fuel cell in accordance with this embodiment, (II) a fuel gas inlet port (fuel gas inlet) 22 and an oxidant gas inlet port (oxidant gas inlet) 25 are formed close to each other in the pair of separators 5a and 5b. (III) The first gas flow path 7a is so formed that the fuel gas as a whole does not flow against gravity direction, but does flow along gravity direction through the first gas flow path 7a. And (IV) the second gas flow path 7b is so formed that the oxidant gas as a whole does not flow against gravity direction, but does flow along gravity direction through the second gas flow path 7b.

In the present invention, "fuel gas" may contain not only reducing agent such as hydrogen gas, but also moisture such as water vapor for moistening or less reactive gas components not involved in electrode reaction such as nitrogen and rare gases. "Oxidant gas" may contain not only oxidizer such as oxygen gas, but also moisture such as water vapor for moistening or less reactive gas components not involved in electrode reaction such as nitrogen and rare gases.
The state in which "the fuel gas as a whole does not flow against gravity direction, but does flow along gravity direction" means the state in which the fuel gas does not flow against gravity direction, but does flow along gravity direction from the macroscopic viewpoint (from the viewpoint of the fuel gas as a whole), even though gas molecules that constitute the fuel gas sometimes move against the gravity direction due to their thermal motion etc. from the microscopic viewpoint.
The state in which "the oxidant gas as a whole does not flow against gravity direction, but does flow along gravity direction" means the state in which the oxidant gas does not flow against gravity direction, but does flow along gravity direction from the macroscopic viewpoint (from the viewpoint of the oxidant gas as a whole), even though gas molecules that constitute the fuel gas sometimes move against the gravity direction due to their thermal motion etc. from the microscopic viewpoint.

Employing the structure defined by the above description (I) to (IV) allows the reaction gases (condensate in the reaction gases) to flow in the gravity direction, not against the gravity direction, in the first gas flow path 7a shown in Figure 4 and the second gas flow path 7b shown in Figure 5, which in turn makes it possible to smoothly introduce the reaction gases (condensate in the reaction gases) to the fuel gas outlet port 24 (fuel gas outlet) and the oxidant gas outlet port (oxidant gas outlet), even if the dew point of reaction gases is raised and the gases in the supersaturated state (in which gases and condensed water coexist) are fed to the fuel cell so as to keep high the cell performance or durability of the polymer electrolyte fuel cell and the reaction produces water, whereby the moisture content in the gas flow paths is increased. Thus, the occurrence of flooding midway along the gas flow paths can be sufficiently avoided. Further, employing the structure defined by the above description (V) allows more smooth movement of the condensed water, which uses gravity as driving force, to the fuel gas outlet port 24 and the oxidant gas outlet port 26, thereby making possible more reliable production of the above described effect. Still further, employing the structure defined by the above description (V) makes it easier to arrange the polymer electrolyte fuel cell of the present invention on an installation surface such as ground surface. The effect can be much more reliably produced by employing, in addition to the structure defined by the descriptions (I) to (V), the structure (VI) in which the fuel gas outlet port 24 and the oxidant gas outlet port 26 are formed closed to each other as shown in Figures 4 and 5, because such a structure allows more smooth movement of the condensed water, which uses gravity as driving force, to the fuel gas outlet port 24 and the oxidant gas outlet port 26.

As shown in Figures 4 and 5, employing the structure defined by the descriptions (I) to (VI) (though (V) is not essential but preferable) allows the outlined direction D4 of the fuel gas flow in the gravity direction D1 in the first gas flow path 7a (the direction almost parallel to the gravity direction D1 in which the fuel gas flows roughly from the fuel gas inlet port 22, where potential energy is relatively high, to the fuel gas outlet port 24, where potential energy is relatively low) to be almost parallel to the outlined direction D5 of the oxidant gas flow in the gravity direction D1 in the second gas flow path 7b (the direction almost parallel to the gravity direction D1 in which the oxidant gas flows roughly from the oxidant gas inlet port 25, where potential energy is relatively high, to the fuel gas outlet port 26, where potential energy is relatively low). In the present invention, the first gas flow path 7a (the gas flow path of the anode) and the second gas flow path 7b (the gas flow path of the cathode) that satisfy the requirements of the structure defined by the descriptions (I) to (VI) (though (V) is not essential but preferable) are referred to as the first gas flow path 7a (the gas flow path of the anode) and the second gas flow path 7b (the gas flow path of the cathode) each having a structure of "parallel flow".

Employing the structure defined by the above descriptions (I) to (IV), preferably defined by the above descriptions (I) to (V) and more preferably defined by the above descriptions (I) to (VI) allows the differential pressure between the reaction gases between the electrodes, the anode and the cathode, to be sufficiently reduced at any region of the anode and the cathode. Thus, the dynamic (mechanical) stress which the MEA 10 undergoes can be sufficiently reduced. And even if pinholes are made in the MEA 10, the amount of crossleak can be sufficiently inhibited, since the differential pressure between the reaction gases is small.

Further, since the MEA 10 develops heat when electricity is generated, to keep the temperature of the MEA 10 at a permissible operating temperature, the separators 5a and 5b include cooling water flow paths 8a and 8b formed as grooves, respectively, on their surfaces opposite to the surfaces on which the gas flow paths 7a and 7b are formed, so that cooling fluid such as cooling water is circulated through them.

In the polymer electrolyte fuel cell of this embodiment, the polymer electrolyte membrane 1 of the MEA 10 has a first notched portion 9a, where the anode 4a is not formed (the catalyst layer 2a is not formed), formed on its main surface on the anode 4a side, as shown in Figure 1. And the polymer electrolyte membrane 1 of the MEA 10 also has a second notched portion 9b, where the cathode 4b is not formed (the catalyst layer 2b is not formed), formed on its main surface on the cathode 4b side.
Further, the first notched portion 9a and the second notched portion 9b are formed in such positions that they are overlapped at least in part when viewed from the direction almost normal to the main surface of the polymer electrolyte membrane 1 on either of the anode 4a and cathode 4b sides.

On the first notched portion 9a of the polymer electrolyte membrane 1 is arranged a first reinforcement member 12a having gas permeability, while on the second notched portion 9b of the polymer electrolyte membrane 1 is arranged a second reinforcement member 12b having gas permeability. In the first and second notched portions 9a and 9b, the polymer electrolyte membrane 1 is supported by the first and second reinforcement members 12a and 12b in such a manner as to be held between them.
In more particular, as shown in Figures 1 to 3, the anode 4a and the cathode 4b of the polymer electrolyte fuel cell in accordance with this embodiment include the first notched portion 9a and the second notched portion 9b, respectively, in the left-hand portion of Figures 1 to 3. And part of the gas diffusion layer 3a and that of the gas diffusion layer 3b extend to the first notched portion 9a and the second notched portion 9b, respectively, to form the first reinforcement member 12a and the second reinforcement member 12b.

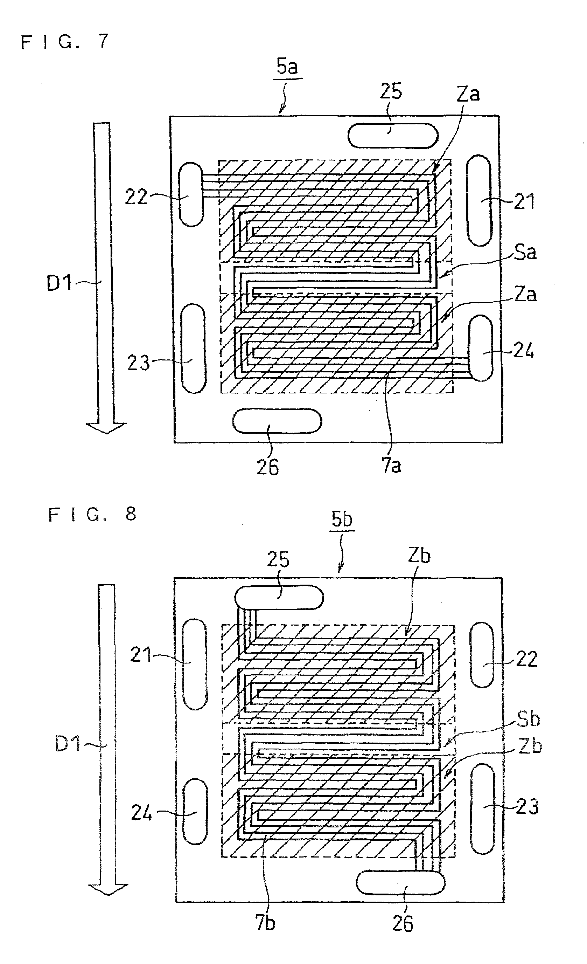

Accordingly, the unit cell 11 in accordance with this embodiment is so constructed that, when the MEA 10 is held between the separators 5a and 5b, in the separator 5a, which is on the anode 4a side, the anode 4a is positioned in the hatched portion Ya enclosed by the broken line shown in Figure 4, while in the separator 5b, which is on the cathode 4b side, the cathode 4b is positioned in the hatched portion Yb enclosed by the broken line shown in Figure 8.
In the portions Sa and Sb in Figures 4 and 5 (i.e. the upstream portions of the first and second gas flow paths 7a and 7b), the first reinforcement member 12a and the second reinforcement member 12b are positioned, respectively; thus, the polymer electrolyte membrane 1 is held between the separators 5a and 5b while supported by the first reinforcement member 12a and the second reinforcement member 12b.
The first and second notched portions 9a and 9b of the polymer electrolyte membrane 1 are not left in a naked state, but held between the separators 5a and 5b while supported by the first reinforcement member 12a and the second reinforcement member 12b, whereby the occurrence of the above described problem with the solid polymer fuel cell described in Japanese Patent Laid-Open No. 2000-277128 can be sufficiently suppressed.

The thickness of the first and second reinforcement members 12a and 12b need not be as small as that of, for example, the catalyst layers 2a and 2b. However, in order to prevent the damage of the polymer electrolyte membrane 1, their structure is so designed that they can support the polymer electrolyte membrane 1 without fully pressurizing the same, when the MEA 10 is held between the separators 5a and 5b.
In this embodiment, since the first and second reinforcement members 12a and 12b are made of part of the gas diffusion layer 3a and that of the gas diffusion layer 3b, the thickness of the first and second reinforcement members 12a and 12b can be adjusted utilizing the uneven portion which the above described porous substrate constituting the gas diffusion layers 3a and 3b (e.g. carbon paper, carbon felt) has intrinsically on its surface (in other words, considering the thickness of the uneven portion).
For example, when the porous substrate constituting the gas diffusion layers 3a and 3b has a noticeable uneven portion on its surface, the thickness of the gas diffusion layers 3a and 3b in the anode 4a and the cathode 4b and that of the gas diffusion layers 3a and 3b constituting the first and second reinforcement members 12a and 12b (extended portions) can be made almost the same.

Because of the above described structure, the polymer electrolyte fuel cell in accordance with this embodiment allows the moisture in the fuel gas and the moisture in the oxidant gas to migrate from one side to another through the polymer electrolyte membrane 1 utilizing the concentration gradient as driving force (driving source), even if the moistened conditions of the fuel gas or the oxidant gas fed to the fuel cell change. Thus, it allows the moistened conditions on the anode 4a side and the cathode 4b side to be kept good (specifically, to ensure good ion conduction in the polymer electrolyte in the catalyst layers and the polymer electrolyte membrane), and at the same time, allows a balance of moistened condition between the two sides, that is, moistened condition between the fed reaction gases to be maintained. Further, because of the structure defined by the above descriptions (I) to (IV) (preferably the structure defined by the above descriptions (I) to (V) and more preferably (I) to (VI)), the polymer electrolyte fuel cell in accordance with this embodiment makes it possible to sufficiently avoid the progress of drying of the polymer electrolyte in the catalyst layers and of the polymer electrolyte membrane, and in addition, the occurrence of flooding. As a result, the damage and the degradation of the anode 4a, cathode 4b and polymer electrolyte membrane 1 can be sufficiently suppressed, whereby the deterioration of the cell performance of the cell (polymer electrolyte fuel cell) 11 can be readily and reliably reduced.

The area of the first notched portion Sa, where the first reinforcement member 12a is positioned, and that of the second notched portion Sb, where the second reinforcement member 12b is positioned, will be described with reference to Figures 4 and 5.
In this embodiment, when it is assumed that the total area of the first gas flow path 7a of the separator 5a shown in Figure 4 is represented by the portion shown by the broken line in Figure 4 (in other words, the sum of the portion represented by Sa and the portion represented by Ya), preferably the ratio Ra of the area of the first notched portion (the first reinforcement member 12a in this embodiment) to the total area of the first gas flow path 7a is 5 to 50%.
Likewise, when it is assumed that the total area of the second gas flow path 7b of the separator 5b shown in Figure 5 is represented by the portion shown by the broken line in Figure 5 (in other words, the sum of the portion represented by Sb and the portion represented by Yb), preferably the ratio Rb of the area of the second notched portion (the second reinforcement member 12b in this embodiment) to the total area of the second gas flow path 7b is 5 to 50%.

Selecting the above described range allows the polymer electrolyte fuel cell to fully produce the capability of exchanging the moisture in the fuel gas with the moisture in the oxidant gas. To ensure a balance of moistened condition between the fed reaction gases and avoid the occurrence of flooding, the ratios Ra and Rb of up to 50% are sufficient. If the ratios are 50% or lower, excess Sa and Sb portions are not produced. Thus, such a range is preferable.
In this embodiment, since the anode 4a and the cathode 4b each have a notched portion (the first notched portion 9a and the second notched portion 9b) in such positions as to be opposite to each other, it is preferable that the values of the above described Ra and Rb are almost equal.

As described above, the unit cell 11 in accordance with this embodiment has a structure in which naked portions (in other words, first and second notched portions) are formed on the polymer electrolyte membrane 1 in the upstream portion of the first gas flow path 7a and the second gas flow path 7b and the first and second reinforcement members 12a and 12b having gas permeability are allowed to intervene in the naked portions so that the polymer electrolyte membrane 1 is supported by the first and second reinforcement members 12a and 12b.
This allows the moisture in the fuel gas and the moisture in the oxidant gas to be in equilibrium with each other in the portions of the first and second reinforcement members 12a and 12b, even if the moistened conditions of the fuel gas and the oxidant gas fed to the fuel cell change, whereby the moistened conditions of the anode 4a side and the cathode 4b side can be kept constant. And the moistened conditions of the anode 4a and the cathode 4b are allowed to be almost uniform, whereby the damage and degradation of the polymer electrolyte membrane 1 as well as the deterioration of the cell performance can be suppressed.

Figure 4 is a schematic plan view of a separator 5a including a first gas flow path 7a for feeding fuel gas to the anode 4a and discharging fuel gas from the anode 4a. The separator 5a is provided with a fuel gas inlet port 22, a fuel gas outlet port 24, and the first gas flow path 7a connecting the inlet port 22 and the outlet port 24.
The gas flow path 7a may take any form without specific limitations; however, in this embodiment, it is a serpentine gas flow path which is made of a plurality of linear grooves and turned grooves that connect the ends of the adjacent linear grooves from upstream to downstream. In such a serpentine gas flow path, the grooves are made at regular intervals.

Figure 5 is a schematic plan view of a separator 5b including a second gas flow path 7b for feeding oxidant gas to the cathode 4b and discharging oxidant gas from the cathode 4b. The separator 5b is provided with an oxidant gas inlet port 25, an oxidant gas outlet port 26, and the second gas flow path 7b connecting the inlet port 25 and the outlet port 26.
The second gas flow path 7b may also take any form without specific limitations; however, in this embodiment, it is a serpentine gas flow path which is made of a plurality of linear grooves and turned grooves that connect the ends of the adjacent linear grooves from upstream to downstream. In such a serpentine gas flow path, the grooves are made at regular intervals.

As is already described above, since the MEA 10 develops heat when electricity is generated, to keep the temperature of the MEA 10 at a permissible operating temperature, the separators 5a and 5b include cooling water flow paths 8a and 8b, respectively, on their surfaces opposite to the surfaces on which the gas flow paths 7a and 7b are formed, so that cooling fluid such as cooling water is circulated through the cooling water flow paths 8a and 8b.
Accordingly, the separators 5a and 5b each include a cooling water inlet port 21 and a cooling water outlet port 23, and on the back side of the separator 5a shown in Figure 4 and on the back side of the separator 5b shown in Figure 5 are provided cooling water flow paths 8a and 8b made of grooves that connect the cooling water inlet port 21 and the cooling water outlet port 23, respectively.

The cooling water flow paths 8a and 8b may take any form without specific limitations; and, in this embodiment, for example, a serpentine cooling water flow path which is made of a plurality of linear grooves and turned grooves that connect the ends of the adjacent linear grooves from upstream to downstream can be used. In such a serpentine cooling water flow path, the grooves can be made at regular intervals.
Accordingly, the rear side of the separator 5a shown in Figure 4, for example, may have the same structure as the surface of the separator 5b shown in Figure 5. Conversely, the rear side of the separator 5b shown in Figure 5 may have the same structure as the surface of the separator 5a shown in Figure 4. Such a design can be worked out by conventional procedure as long as the effects of the present invention are not destroyed.

### [Second Embodiment]

The second embodiment of the polymer electrolyte fuel cell of the present invention will be described. The structure of the polymer electrolyte fuel cell in accordance with the second embodiment is the same as that of the polymer electrolyte fuel cell in accordance with the first embodiment, except that the MEA in accordance with the second embodiment has a structure different from that of the MEA 10 in the unit cell 11, which is mounted in the polymer electrolyte fuel cell in accordance with the first embodiment shown in Figure 1.
In the following, the MEA 30 included in the unit cell 11 in accordance with the second embodiment (the second embodiment of the MEA of the present invention) will be described.

Figure 6 is a schematic perspective view of the MEA 30, which is mounted in a cell 11 in accordance with this embodiment. As shown in Figure 6, in the MEA 30 in accordance with this embodiment, the anode 34a and the cathode 34b have first notched portion and second notched portion, respectively, in the middle portion of the MEA in Figure 6 (in other words, the midstream portion of first and second gas flow paths 7a and 7b shown in Figures 7 and 8).
And part of a gas diffusion layer 33a and that of a gas diffusion layer 33b extend to the first and second notched portions, respectively, to form first and second reinforcement members 42a and 42b, respectively.

Figure 7 is a schematic plan view of the separator 5a in accordance with this embodiment that includes a first gas flow path 7a for feeding fuel gas to the anode 4a and discharging fuel gas from the anode 4a. Figure 8 is a schematic plan view of the separator 5b in accordance with this embodiment that includes a second gas flow path 7b for feeding oxidant gas to the cathode 4b and discharging oxidant gas from the cathode 4b. Figures 7 and 8 correspond to Figures 4 and 5 in the above described embodiment 1, respectively. The unit cell 11 in accordance with this embodiment is so constructed that, when the MEA 30 is held between the separators 5a and 5b, in the separator 5a, which is on the anode 34a side, the anode 34a is positioned in the two hatched portions Za enclosed by the broken line shown in Figure 7, while in the separator 5b, which is on the cathode 34b side, the cathode 34b is positioned in the two hatched portions Zb enclosed by the broken line shown in Figure 8.

In the portions Sa and Sb in Figures 7 and 8 (i.e. the midstream portions of the first and second gas flow paths 7a and 7b), the first reinforcement member 42a and the second reinforcement member 42b are positioned, respectively; thus, the polymer electrolyte membrane 1 is held between the separators 5a and 5b while supported by the first reinforcement member 42a and the second reinforcement member 42b.
As described above, the cell 11 in accordance with this embodiment has a structure in which naked portions (in other words, first and second notched portions) are formed on the polymer electrolyte membrane 1 in the midstream portion of the first gas flow path 7a and the second gas flow path 7b and the first and second reinforcement members 42a and 42b having gas permeability are allowed to intervene in the naked portions so that the polymer electrolyte membrane 1 is supported by the separators 5a and 5b.

Because of the above described structure, the polymer electrolyte fuel cell in accordance with this embodiment allows the moisture in the fuel gas and the moisture in the oxidant gas to migrate from one side to another through the polymer electrolyte membrane 31 utilizing the concentration gradient as driving force (driving source), even if the moistened conditions of the fuel gas or the oxidant gas fed to the fuel cell change. Thus, it allows the moistened conditions on the anode 34a side and the cathode 34b side to be kept good (a state in which good ion conduction can be ensured in the polymer electrolyte in the catalyst layers and in the polymer electrolyte membrane), and at the same time, allows a balance of moistened condition between the two sides, that is, moistened condition between the fed reaction gases to be maintained. Further, like in the first embodiment described above, because of the structure defined by the above descriptions (I) to (IV) (preferably the structure defined by the above descriptions (I) to (V) and more preferably (I) to (VI)), the polymer electrolyte fuel cell in accordance with this embodiment makes it possible to sufficiently avoid the progress of drying of the polymer electrolyte in the catalyst layers and of the polymer electrolyte membrane, and in addition, the occurrence of flooding. As a result, the damage and the degradation of the anode 34a, cathode 34b and polymer electrolyte membrane 31 can be sufficiently suppressed, whereby the deterioration of the cell performance of the unit cell (polymer electrolyte fuel cell) 11 can be readily and reliably reduced.

This allows the moisture in the fuel gas and the moisture in the oxidant gas to be in equilibrium with each other in the portions of the first and second reinforcement members 42a and 42b, even if the moistened conditions of the fuel gas and the oxidant gas fed to the fuel cell change, whereby the moistened conditions of the anode 34a side and the cathode 34b side can be kept as constant as possible.
And the moistened conditions of the anode 34a and the cathode 34b are allowed to be almost uniform, whereby the damage and degradation of the polymer electrolyte membrane 1 as well as the deterioration of the cell performance can be suppressed.

In this embodiment, providing the first and second reinforcement members 42a and 42b in the middle (in the midstream portion) of the polymer electrolyte membrane 1 makes it possible to offer a uniform balance of water content between the anode 34a and the cathode 42b against the production of water or the consumption of gas in the upstream portion. And besides, it allows water to migrate to the anode 34a side when the cathode 34b side is unduly moistened by the produced water, thereby making the prevention of flooding more reliable.
Thus, the moistened conditions of the anode 34a and the cathode 34b are allowed to be almost uniform, whereby the damage and degradation of the polymer electrolyte membrane 1 and the deterioration of the cell performance can be sufficiently suppressed.

While the present invention has been described in detail in terms of preferred embodiments, it is to be understood that the present invention is not limited to these embodiments.
For example, in each of the above described embodiments, a structure has been described in which first and second notched portions are provided in the upstream portion of the anode and cathode and gas diffusion layers are extended to the first and second notched portions to form first and second reinforcement members there. However, as the first and second reinforcement members, other gas-permeable reinforcement members such as metal mesh or resin mesh can also be used.

Further, in the polymer electrolyte fuel cell of the present invention, the reinforcement members are provided in the structure so as to support the polymer electrolyte membrane by intervening between the polymer electrolyte membrane and each of the separators in the notched portions, and their size or shape can be appropriately designed as long as the effects of the present invention are not destroyed.
For example, the reinforcement members may be provided in such a manner as to fill the whole notched portions or to fill part of the notched portions. In the latter case, the requirement the first and second reinforcement members should meet is to support the polymer electrolyte membrane 1 at least one point (preferably more than one point), respectively. In this case, the first and second reinforcement members may be pillar-like members which extend from the inside surface (main surface) of each separator (members made of the same material as that of the separators and integrated into the separators). When the reinforcement members are such pillar-like members, the members themselves do not have gas permeability, because they are made of the same material as that of the separators. However, the part of the interstice created between each notched portion and each separator, where no pillar-like member exists, (when more than one pillar-like member exists, the interstices between the pillar-like members are also included) functions as gas-permeable space.

Further, in each of the above described embodiments, a structure has been described in which the shape of the first and second gas flow paths 7a and 7b and the cooling water flow paths 8a and 8b is serpentine. However, various shapes can be employed, as long as the effects of the present invention are not destroyed.
The spacing between grooves constituting the first and second gas flow paths 7a and 7b and the cooling water flow paths 8a and 8b can also be appropriately designed, as long as the effects of the present invention are not destroyed. For example, the grooves can be made at regular intervals.

Further, in each of the above described embodiments, a polymer electrolyte fuel cell has been described in terms of a unit cell. However, a polymer electrolyte fuel cell can also be used which is produced by: preparing a laminate by stacking a plurality of (e.g. 10 to 200) unit cells; holding the laminate between a pair of end plates via a current collecting plate and an insulating plate; and fastening the laminate, current collecting plate, insulating plate and end plates with bolts and nuts for fastening.
In each of the above described embodiments, a structure has been described in which both of the anode-side and cathode-side separators are provided with a cooling water flow path. However, a structure can also be employed in which either of the anode-side and cathode-side separators alone is provided with a cooling water flow path. In case where a plurality of unit cells are used as a laminate, as described above, cells whose anode-side and cathode-side separators include no cooling water flow path can also be used.

A structure can also be employed in which a cooling water flow path is not provided between unit cells, but for every two unit cells, for example. In this case, a single separator can be used which includes a fuel gas flow path on one side and an oxidant gas flow path on the other side and serves both as an anode-side separator plate and a cathode-side separator plate.
Further, in each of the above described embodiments, a gas diffusion electrode may have a structure made of: a gas diffusion layer; a catalyst layer; and another layer arranged between the gas diffusion layer and the catalyst layer (e.g. a structure that also includes a layer which has water repellency and electron conductivity and is provided to improve the adhesion between the gas diffusion layer and the catalyst layer).
In each of the above described embodiments, a polymer electrolyte fuel cell has been described which includes a gas diffusion electrode having a gas diffusion layer. However, the gas diffusion electrode aboard the polymer electrolyte fuel cell of the present invention is not limited to the above described type of one. A gas diffusion electrode having no gas diffusion electrode (e.g. a gas diffusion electrode made of a catalyst layer) can also be employed, as long as the effects of the present invention are not destroyed.

### Examples

In the following, the present invention will be described in more detail by examples. However, it is to be understood that the invention is not intended to be limited to these examples.

### <<Example 1>>

In this example, a polymer electrolyte fuel cell in accordance with the first embodiment of the present invention, that is, a polymer electrolyte fuel cell (a unit cell) having a structure shown in Figure 1 was prepared.
First, acetylene black (Denkablack, manufactured by DENKI KAGAKU KOGYO KABUSHIKI KAISHA, particle size: 35 nm), as conductive carbon particles, was mixed with an aqueous dispersion of polytetrafluoroethylene (PTFE) (D1, manufactured by DAIKIN INDUSTRIES, ltd.) to prepare ink for water-repellent treatment that contains 20% by weight of PTFE on a dry weight basis.

The above described ink for water-repellent treatment was coated on and impregnated into carbon paper (TGPH060H, manufactured by Toray Industries, Inc.), as a porous substrate that constitutes gas diffusion layers, and heat treated at 300°C using hot-air drier to form gas diffusion layers (about 200 µm).
Then, 66 parts by weight of catalyst (Pt: 50% by weight) obtained by allowing platinum metal particles to be supported on Ketjen Black (Ketjen Black EC, manufactured by Ketjen Black International, particle size: 30 nm), as conductive carbon particles, was mixed with 33 parts by weight (on a polymer dry mass basis) of perfluorocarbonsulfonic acid ionomer (5% by weight Nafion dispersion, manufactured by Aldrich, U.S.), and the resultant mixture was formed into catalyst layers (10 to 20 µm thick).

An MEA 10 having a structure shown in Figures 1 to 3 was prepared using the above described gas diffusion layers and catalyst layers. Each of the gas diffusion layers was cut to a shape so that it constitutes a first reinforcement member 12a or a second reinforcement member 12b in the first notched portion 9a or the second notched portion 9b shown in Figure 1.
Using the gas diffusion layers and catalyst layers formed as described above, an anode 4a made of the catalyst layer 2a and the gas diffusion layer 3a, a cathode 4b made of the catalyst layer 2b and the gas diffusion layer 3b, and first and second reinforcement members 12a and 12b made of part of the gas diffusion layer 3a and part of the gas diffusion layer 3b, respectively, were joined on the sides of a polymer electrolyte membrane 1 (Nafion 112 membrane, manufactured by Du Font , U.S.) to prepare an MEA 10.

On each periphery of the polymer electrolyte membrane 1 of the MEA 10 prepared as above, a plate-like rubber gasket was joined so that it was positioned on the portion shown by the broken line in the separator 5a or 5b shown in Figure 4 or 5. And holes were made which corresponded to the fuel gas inlet port 22, fuel gas outlet port 24, oxidant gas inlet port 25, oxidant gas outlet port 26, cooling water inlet port 21 and cooling water outlet port 23 of the separator 5a and 5b described below.
As the separators 5a and 5b, separators having a structure shown in Figure 4 or 5 were used which were obtained by forming a fuel gas inlet port 22, a fuel gas outlet port 24, an oxidant gas inlet port 25, an oxidant gas outlet port 26, a cooling water inlet port 21 and a cooling water outlet port 23 on a graphite plate impregnated with phenol resin having outside dimensions of 20 cm x 32 cm x 1.3 mm and having gas flow paths 7a and 7b composed of 0.5 mm-degth grooves. On each of the rear sides of the separators 5a and 5b, a cooling water flow path having the same shape as that of the gas flow paths 7a and 7b was provided.
The MEA 10 was held between the separators 5a and 5b and fixed to prepare a polymer electrolyte fuel cell (fuel cell 1) in accordance with the first embodiment of the present invention.

### <<Example 2>>

In this embodiment, a polymer electrolyte fuel cell (a unit cell) in accordance with the second embodiment of the present invention was prepared in the same manner as in Example 1, provided that an MEA 30 having a structure shown in Figure 6 was used.
Each of the gas diffusion layers prepared in the same manner as in Example 1 was cut to a shape of the gas diffusion layer 33a including the first reinforcement member 42a or the second reinforcement member 42b shown in Figure 6. Using the gas diffusion layers thus prepared and the above described catalyst layers, an anode 34a made of a catalyst layer 32a and a gas diffusion layer 33a, a cathode 34b made of a catalyst layer 32b and a gas diffusion layer 33b, and first and second reinforcement members 42a and 42b made of part of the gas diffusion layer 33a and part of the gas diffusion layer 33b, respectively, were joined on the sides of a polymer electrolyte membrane 1 (Nafion 112 membrane, manufactured by Du Pont, U.S.) to prepare an MEA 30.
The MEA 30 was held between the separators 5a and 5b and fixed to prepare a polymer electrolyte fuel cell (fuel cell 2) in accordance with the second embodiment of the present invention.

### <<Comparative Example>>

A polymer electrolyte fuel cell (fuel cell 3) was prepared in the same manner as in Example 1, except that the first and second notched portions 9a and 9b were not provided and an anode and a cathode which cover the total area of the first gas flow path 7a and the second gas flow path 7b, respectively, were provided.

### [Evaluation Test 1]

An operation test was conducted for each of the fuel cells 1 to 3 prepared as above.
Moistened hydrogen gas, as a fuel gas, was fed to the first gas flow path 28 through the fuel gas inlet port 22. The moistened hydrogen gas used had a dew point of 70°C. Moistened air, as an oxidant gas, was fed to the second gas flow path 29 through the oxidant gas inlet port 25. Various types of moistened air having a dew point of 40°C, 45°C, 50°C, 55°C, 60°C, 65°C, 70°C, 75°C, 80°C, 85°C or 90°C were used. The temperature of the overall fuel cell was 70°C, and the fuel utilization rate and the oxygen utilization rate fixed to 70% and 40%, respectively.

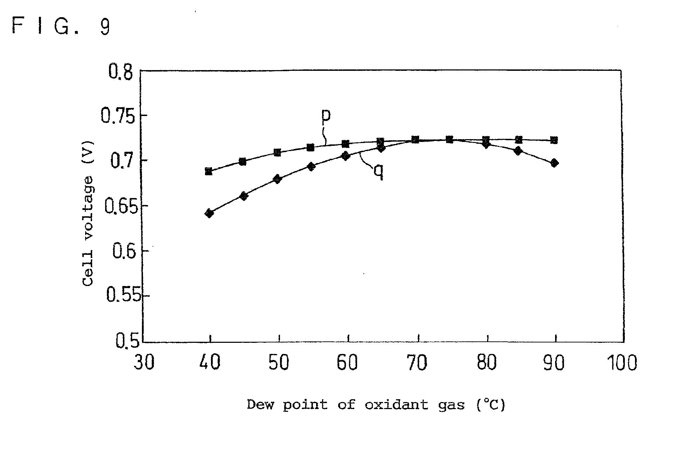

Under the above described conditions, the cell voltage (V) of each of the fuel cells 1 and 3 was measured. The measurements of the respective fuel cells were shown in Figure 9 with p and q, respectively. The cell voltage (V) is plotted in ordinate and the dew point (°C) of the oxidant gas in abscissa.
As shown in Figure 9, it is apparent that in the fuel cell 1 of the present invention, in which notched portions were provided in the respective gas flow paths in the upstream portion, the difference in cell performance was suppressed due to the moisture balance effect, even if there was difference in degree of moistening between the fuel gas and the oxidant gas.

### [Evaluation Test 2]

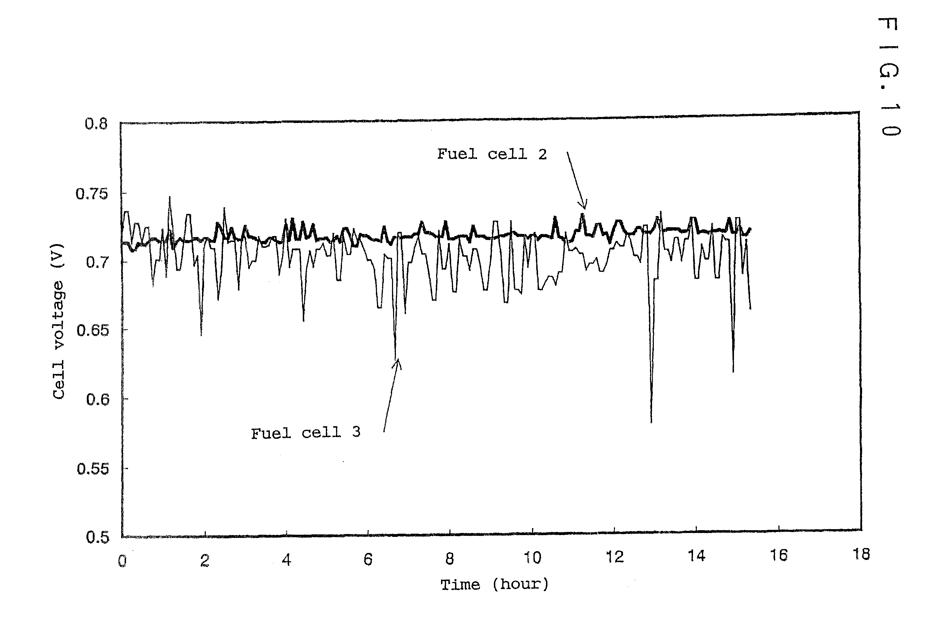

The fuel cell 2 of the present invention, in which notched portions were provided in the respective gas flow paths in the midstream portion, and the fuel cell 3 for comparison in which no notched portions were provided, were operated consecutively under the same conditions as above, provided that air having a dew point of 85°C was used. The results are shown in Figure 10.
In the fuel cell 2, a stable cell performance was shown, while in the fuel cell 3, flooding occurred and the voltage was unstable. This is because in the fuel cell 3, flooding occurred on the cathode side, making the cell performance unstable, while in the fuel cell 2, water migrated to the anode side, thereby suppressing the occurrence of flooding.

### Industrial Applicability

As described so far, according to the present invention, a polymer electrolyte fuel cell can be provided which is capable of: maintaining a balance of moistened conditions between the anode side and the cathode side, in other words, a balance of moistened conditions between the reaction gases fed, and in addition, avoiding the occurrence of flooding, even if the moistened conditions of the fuel gas or the oxidant gas fed to the fuel cell change; sufficiently retarding the degradation of the anode, cathode and polymer electrolyte membrane, and hence cross leak; and thus reducing the deterioration of the cell performance readily and reliably. Accordingly, the polymer electrolyte fuel cell of the present invention is suitable for fuel cells for vehicles or cogeneration systems.

## Claims

1. A polymer electrolyte fuel cell, comprising a cell which comprises: at least,
a membrane electrode assembly comprising an anode comprising a catalyst layer, a cathode comprising a catalyst layer, and a polymer electrolyte membrane which is provided between the anode and the cathode and has hydrogen-ion conductivity; and
a pair of conductive separators which are arranged in such a manner as to hold the membrane electrode assembly between them and which has a first gas flow path having a fuel gas inlet for feeding fuel gas to the anode and a fuel gas outlet for discharging fuel gas from the anode formed on the main surface facing the anode and a second gas flow path having an oxidant gas inlet for feeding oxidant gas to the cathode and an oxidant gas outlet for discharging oxidant gas from the cathode formed on the main surface facing the cathode, **characterized in that**
the cell is arranged in such a manner that the direction normal to either of the main surface facing the anode and the main surface facing the cathode of the pair of separators intersects the gravity direction, the fuel gas inlet and the oxidant gas inlet are formed close to each other in the pair of separators, the first gas flow path is so formed that the fuel gas as a whole flows through the first gas flow path not against the gravity direction, but in the gravity direction, and the second gas flow path is so formed that the oxidant gas as a whole flows through the second gas flow path not against the gravity direction, but in the gravity direction,
the main surface facing the anode of the polymer electrolyte membrane of the membrane electrode assembly has a first notched portion formed, where the catalyst layer is not formed, the main surface facing the cathode of the polymer electrolyte membrane of the membrane electrode assembly has a second notched portion formed, where the catalyst layer is not formed, and the first and second notched portions are formed in such positions that they are overlapped at least in part when viewed from the direction almost normal to either of the main surface facing the anode and the main surface facing the cathode of the polymer electrolyte membrane,
the first notched portion of the polymer electrolyte membrane has a first reinforcement member arranged having gas permeability,
the second notched portion of the polymer electrolyte membrane has a second reinforcement member arranged having gas permeability, and
the polymer electrolyte membrane is supported in the first and second notched portions in such a manner that the polymer electrolyte membrane is held between the first reinforcement member and the second reinforcement member.

2. The polymer electrolyte fuel cell according to claim 1, **characterized in that** the cell is arranged in such a manner that the direction normal to either of the surface facing the anode and the surface facing the cathode of the pair of separators intersects almost perpendicular to the gravity direction.

3. The polymer electrolyte fuel cell according to claim 1, **characterized in that** the position is the upstream portion of the first flow path and the second flow path and the first gas flow path and the second gas flow path are provided in such a manner as to be parallel to each other.

4. The polymer electrolyte fuel cell according to claim 1, **characterized in that** the position is the midstream portion of the first flow path and the second flow path and the first gas flow path and the second gas flow path are provided in such a manner as to be parallel to each other.

5. The polymer electrolyte fuel cell according to claim 1, **characterized in that** the anode and the cathode each have a gas diffusion layer provided outside the catalyst layers, and
the first reinforcement member and the second reinforcement member are made of part of the gas diffusion layers.

6. The polymer electrolyte fuel cell according to claim 1, **characterized in that** the ratio of the first notched portion to the total area of the first gas flow path and the ratio of the second notched portion to the total area of the second gas flow path are 5 to 50%, respectively.
